# EUROPÄISCHE PATENTANMELDUNG

(11) **EP 2 476 532 A2**
(43) Veröffentlichungstag der Anmeldung: **18.07.2012**
(21) Anmeldenummer: 12156066.8
(22) Anmeldetag: 21.03.2007
(51) Int. Cl.: B29B 9/06, B29C 47/30

(54) **Vorrichtung zur Granulierung von leichtsiederhaltigen Polymerschmelzen**

(30) Priorität: 22.03.2006 EP 06111527
(62) Teilanmeldung aus: 07727158.3
(71) Anmelder: BASF SE, 67056 Ludwigshafen (DE)
(72) Erfinder: Seibring, Joachim, 67251 Freinsheim (DE); Becker, Jens, 67304 Eisenberg (DE); Kopietz, Michael, 67269 Grünstadt (DE); Bruckmann, Theodor, 48268 Greven - Gimpte (DE)
(74) Vertreter: Kudla, Karsten

(57) **Zusammenfassung**

Die Erfindung betrifft ein Verfahren zur Granulierung von Polymerschmelzen in einer Granulierkammer, in der eine Schneidvorrichtung aufgenommen ist, bei einem Druck oberhalb des Umgebungsdrucks. In einem ersten Schritt wird die Granulierkammer mit einem gegenüber der Polymerschmelze inerten Gas, welches den Druck aufweist, bei dem die Granulierung durchgeführt wird, geflutet. Daran anschließend wird die Polymerschmelze in die Granulierkammer eingepresst. Abschließend wird das Gas aus der Granulierkammer durch eine Flüssigkeit verdrängt, sobald die Polymerschmelze beginnt, die Schneidevorrichtung zu durchfließen, wobei diese in Granulatkörner geschnitten wird.

## Beschreibung

Die Erfindung betrifft ein Verfahren zur Granulierung von Polymerschmelzen in einer Granulierkammer, in der eine Schneidvorrichtung aufgenommen ist, bei einem Druck oberhalb des Umgebungsdrucks.

Im laufenden Betrieb der Granulierung wird die Granulierkammer im Allgemeinen von einer unter erhöhtem Druck stehenden Flüssigkeit durchströmt. Die Flüssigkeit, die die Kammer durchströmt, ist im Allgemeinen Wasser. Daher wird die Granulierung auch als Unterwassergranulierung bezeichnet.

Die Unterwassergranulierung kommt z. B. zum Einsatz, wenn Granulate aus Kunststoffen hergestellt werden, die durch die Herstellung noch Restmonomer, Wasser oder andere Leichtsieder enthalten können. Dies kann zu einem Aufschäumen des Kunststoffes bei der Granulierung bei Umgebungsdruck führen. Durch den erhöhten Druck in der Granulierkammer wird sichergestellt, dass der Kunststoff beim Granulieren nicht expandiert.

Ein Verfahren zur Herstellung von expandierbaren Kunststoffgranulaten ist z. B. in EP-A 0 305 862 beschrieben. Hierbei wird ein Polymergrundstoff oder eine Polymermischung einem Extruder zugegeben und im Extruder aufgeschmolzen. Am Extruder befindet sich ein Injektor zur Zugabe eines Treibmittels in die Schmelze. Die Zugabe des Treibmittels erfolgt dabei unter Druck. Die Schmelze mit dem darin gelösten Treibmittel wird in einer Granulierkammer, die von Wasser durchströmt wird, granuliert. Das Granulat wird mit dem Wasserstrom mitgerissen und einem Trockner zugeführt, in welchem das Granulat getrocknet wird. Als geeignete Polymerzusammensetzungen sind z.B. aromatische Alkenylpolymere oder Copolymere wie Polystryrol, Styrol-Maleinsäureanhydrid-Copolymer, Polycarbonat, Polyester, Polyetherimid, Polysulfon und Polyphenylether genannt.

Aus der Polyamidherstellung ist bekannt, dass sich Wasser, das bei der Polykondensation von Dicarbonsäure mit Diamin entsteht, im Polyamid löst. Dieses Wasser führt dazu, dass das Polyamid bei der Granulierung ohne Entgasung aufschäumt. Auch können große unerwünschte Blasen im Granulat entstehen. Die Entgasung erfolgt derzeit in einem Entgasungsextruder, der hohe Investions- und Wartungskosten erfordert, oder einem Abscheidebehälter, der schnell verkrustet und dann abgereinigt werden muss.

Aufgabe der Erfindung ist es, ein Verfahren bereitzustellen, bei dem die oben genannten Nachteile aus dem Stand der Technik vermieden werden.

Gelöst wird die Aufgabe durch ein Verfahren zur Granulierung von Polymerschmelzen in einer Granulierkammer, in der eine Schneidvorrichtung aufgenommen ist, bei einem Druck oberhalb dem Umgebungsdruck, welches folgende Schritte umfasst:
(a) Fluten der Granulierkammer mit einem gegenüber der Polymerschmelze inerten Gas, welches den Druck aufweist, bei dem die Granulierung durchgeführt wird,
(b) Einpressen der Polymerschmelze in die Granulierkammer,
(c) Verdrängen des Gases aus der Granulierkammer durch eine Flüssigkeit, sobald die Polymerschmelze beginnt, die Schneidevorrichtung zu durchfließen, wobei diese in Granulatkörner geschnitten wird.

Durch das Fluten der Granulierkammer mit einem gegenüber der Polymerschmelze inerten Gas, welches den Druck aufweist, bei dem die Granulierung durchgeführt wird, wird vermieden, dass die Polymerschmelze beim Anfahren des Herstellungsprozesses in der Granulierkammer expandiert.

In der Granulierkammer ist im Allgemein ein schnell rotierendes Messer aufgenommen, welches sich gegen eine Scheidplatte abstützt. Die Polymerschmelze wird durch einzelne Öffnungen in der Scheidplatte hindurch gepresst. Hierbei wird diese in Granulatkörner geschnitten.

Das Einpressen der Polymerschmelze in die Granulierkammer erfolgt vorzugsweise kontinuierlich. Im Allgemeinen wird hierzu eine Schmelzpumpe mit Düsenkopf eingesetzt.

Im Allgemeinen sind im Düsenkopf mehrere Bohrungen aufgenommen, durch welche die Polymerschmelze in die Granulierkammer eingepresst wird. In einer bevorzugten Ausführungsform weisen die Bohrungen ein L/D-Verhältnis von 50-90, bevorzugt von 60-85, besonders bevorzugt von 70-80 auf.

Durch die größere Länge der Düsenbohrungen im Vergleich zu den Düsenbohrungen bei aus dem Stand der Technik bekannten Düsenköpfen wird ebenfalls das Aufschäumen der Polymerschmelze in der Granulierkammer reduziert. In einer besonders bevorzugten Ausführungsform ist der Düsenkopf aus einzelnen gleichartigen Modulen aufgebaut, die jeweils miteinander verbunden werden. Auf diese Weise lässt sich die Länge der Düsenbohrungen auf einfache Weise an die entsprechende Polymerschmelze anpassen, die mit dem Düsenkopf verarbeitet wird. So werden durch Hinzufügen von Modulen die Düsenbohrungen verlängert, während sie durch Entfernen von Modulen verkürzt werden können.

Sobald die Polymerschmelze beginnt, die Schneidevorrichtung zu durchfließen, wobei diese in Granulatkörner geschnitten wird, wird das Gas aus der Granulierkammer durch eine Flüssigkeit verdrängt. Dabei steht die Flüssigkeit vorzugsweise nur unter geringfügigen höheren Druck als das Gas. Ein Fluten der Granulierkammer vor Beginn des Granulierprozesses ist nicht möglich, da in diesem Falle unter Druck stehende Flüssigkeit in den Düsenkopf eindringt und so die Polymerschmelze bereits im Düsenkopf aushärtet. Dies würde zu einer Beschädigung des Düsenkopfes und des Messers führen.

Der Druck der Flüssigkeit in der Granulierkammer liegt im Allgemeinen im Bereich zwischen 1 und 50 bar, vorzugsweise im Bereich von 1,5 bis 30 bar und insbesondere im Bereich von 2 bis 10 bar. Die Temperatur der Flüssigkeit, mit der die Granulierkammer durchströmt wird, liegt vorzugsweise im Bereich von 5 bis 90°C, bevorzugt im Bereich von 10 bis 60°C. Die Maximaltemperatur der Flüssigkeit ist dabei abhängig von dem zu granulierenden Polymer.

Das Fluten der Granulierkammer ist notwendig, um aus dem Granulat ausreichend Wärme abführen zu können, damit dieses schnell erstarrt. Solange das Granulat noch nicht erstarrt ist können die einzelnen Granulatkörner leicht zusammenschmelzen und zu größeren Körnern agglomerieren. Ein Vorteil von Flüssigkeiten gegenüber Gas für die Abkühlung ist, dass Flüssigkeiten im Allgemeinen eine höhere Wärmekapazität und höhere Wärmeleitfähigkeit aufweisen als Gase. Dies führt dazu, dass die Polymerschmelze an eine flüssige Umgebung schneller Wärme abgegeben kann als an eine gasförmige Umgebung und so schneller abkühlt.

Nach dem Schneiden kühlen die Granulatkörner in der Flüssigkeit weiter ab. Um einen kontinuierlichen Betrieb zu gewährleisten, werden die Granulatkörner anschließend in einer bevorzugten Ausführungsform mit der Flüssigkeitsströmung aus der Granulierkammer ausgetragen.

Das inerte Gas, mit welchem die Granulierkammer zu Beginn des Verfahrens geflutet wird, ist vorzugsweise Stickstoff, Luft oder ein Edelgas. Es ist jedoch jedes weitere, dem Fachmann bekannte Gas, welches gegenüber der Polymerschmelze inert ist, geeignet.

Die Flüssigkeit, mit der das Gas aus der Granulierkammer verdrängt wird, ist vorzugsweise Wasser. Anstelle des Wassers ist jedoch auch jede weitere, dem Fachmann bekannte Flüssigkeit geeignet, die mit der Polymerschmelze nicht reagiert.

In einer bevorzugten Ausführungsform werden die bei der Granulierung erzeugten Granulatkörner, die mit der Flüssigkeit aus der Granulierkammer ausgetragen wurden, anschließend aus der Flüssigkeit abgetrennt.

Das erfindungsgemäße Verfahren wird vorzugsweise zur Granulierung von Polymeren eingesetzt, die noch geringe Mengen an Monomeren, Wasser oder anderen Leichtsiedern enthalten können und somit bei der Granulierung expandieren können. Damit das Polymer bei der Granulierung nicht aufschäumt, folgt die Granulierung unter Druck. Hierbei werden die enthaltenen leichtflüchtigen Bestandteile unter Druck im Polymer eingeschlossen. Ein Aufschäumen oder Entstehen von Blasen erfolgt nicht.

Das Erfindungsgemäße Verfahren eignet sich insbesondere zur Herstellung von Granulaten aus Polymerschmelzen, die noch Leichtsieder enthalten. Bevorzugt wird das erfindungsgemäße Verfahren zur Herstellung von Polyamiden eingesetzt.

Bevorzugte Polyamide werden durch Reaktionen von wässrigen Lösungen von Salzen aus α,ω -Alkandicarbonsäuren mit 6 bis 12 Kohlenstoffatomen und α,ω-Alkandiaminen mit 6 bis 12 Kohlenstoffatomen, insbesondere solchen mit gerader Kohlenstoffkette, gebildet. Geeignete Dicarbonsäuren sind beispielsweise Azelainsäure, Adipinsäure, Korksäure, Sebacinsäure oder Dekandicarbonsäure, Terephthalsäure oder Naphtalindicarbonsäure. Bevorzugte α, ω -Alkandicarbonsäuren haben 6 bis 10 Kohlenstoffatome.

Geeignete Diamine sind beispielsweise Hexamethylendiamin, Octamethylendiamin oder Dekamethylendiamin, bis-(4-Aminocyclohexyl)-methan, bis-(4-Amino-3-methylcyclohexyl)-methan, bis-(4-Aminocyclohexyl)-propan-2,2. Bevorzugte α,ω-Alkandiamine haben 6 bis 10 Kohlenstoffatome.

Zudem ist es möglich, Lactame, insbesondere Caprolactam, zur Herstellung von Mischpolyamiden mit zu verwenden.

Weitere geeignete Polyamide sind solche, die aus einem Gemisch aus mindestens einem Lactam und Wasser sowie gegebenenfalls weiteren Monomereinheiten und/oder üblichen Zusatz- und Füllstoffen unter Polyamidbildenden Bedingungen hergestellt werden. Die Herstellung solcher Polyamide ist z.B. aus DE-A 43 21 683 bekannt. Als Lactam geeignet sind z.B. Caprolactam, Önanthlactam, Capryllactam und Lauryllactam sowie deren Mischungen, bevorzugt ist Caprolactam.

Als weitere Monomereinheiten können beispielsweise Dicarbonsäuren, wie Alkandicarbonsäuren mit 6 bis 12 Kohlenstoffatomen, insbesondere 6 bis 10 Kohlenstoffatomen, wie Adipinsäure, Pimelinsäure, Korksäure, Azelainsäure oder Sebacinsäure sowie Terephthalsäure oder Isophthalsäure, Diamine wie C₄ bis C₁₂-Alkyldiamine, insbesondere mit 4 bis 8 Kohlenstoffatomen wie Hexamethylendiamin, Tetramethylendiamin oder Octamethylendiamin, ferner m-Xylylendiamin, bis-(4-aminophenyl)-methan, bis-(4-Aminophenyl)-propan-2,2 oder bis-(4-aminocyclohexyl)-methan, sowie Mischungen von Dicarbonsäuren und Diaminen jeweils für sich in beliebigen Kombinationen, im Verhältnis jedoch vorteilhaft im äquivalenten Verhältnis wie Hexamethylendiammoni-umadipat, Hexamethylendiammoniumterephthalat oder Tetramethylendiammoniumadipat, bevorzugt Hexamethylendiammoniumadipat und Hexamethylendiamoniumterephthalat, in Mengen im Bereich von 0 bis 60, vorzugsweise von 10 bis 50 Gew.-%, bezogen auf die Gesamtmenge an Monomeren, eingesetzt. Besondere technische Bedeutung haben Polycaprolactam und Polyamide, die aus Capolactam, Hexamethylendiamin sowie Adipinsäure, Isophthalsäure und/oder Terephthalsäure aufgebaut sind, erlangt.

In einer Ausführungsform werden Caprolactam und Hexamethylendiamoniumadipat ("AH-Salz") eingesetzt, wobei das AH-Salz als wässrige Lösung verwendet wird. Üblicherweise liegt das Molverhältnis von Caprolactam zu AH-Salz im Bereich von 0,05 zu 99,95 bis 20 zu 80, bevorzugt von 5 zu 95 bis 15 zu 85.

Als übliche Zusatz- und Füllstoffe können Pigmente wie Titandioxid, Siliciumdioxid oder Talk, Kettenregler wie aliphatische und aromatische Carbon- und Dicarbonsäuren wie Propionsäure oder Terephthalsäure, Stabilisatoren wie Kupfer(1)halogenide und Alkalimetallhalogenide, Nukleierungsmittel wie Magnesiumsilikat oder Bornitrid, Katalysatoren wie phosphorige Säure sowie Antioxidantien in Mengen im Bereich von 0 bis 5, bevorzugt von 0,05 bis 1 Gew.-%, bezogen auf die Gesamtmenge an Monomeren eingesetzt werden. Die Additive werden in der Regel von dem Granulieren und vor, während oder nach, bevorzugt nach der Polymerisation zugesetzt.

Erfindungsgemäß geeignete Polyamide weisen im Allgemeinen eine Viskositätszahl von 30 bis 120, vorzugsweise 50 bis 90 ml/g auf, bestimmt in einer 0,5 Gew.-% -igen Lösung in 96 Gew.-%- iger Schwefelsäure bei 25°C gemäß ISO 307.

Polyamide, die durch das erfindungsgemäße Verfahren granuliert werden können, sind z.B. (in Klammern sind die Monomere angegeben):
PA 46 (Tetramethylendiamin, Adipinsäure)
PA 66 (Hexamethylendiamin, Adipinsäure)
PA 69 (Hexamethylendiamin, Azelainsäure)
PA 610 (Hexamethylendiamin, Sebacinsäure)
PA 612 (Hexamethylendiamin, Decandicarbonsäure)
PA 613 (Hexamethylendiamin, Undecandicarbonsäure)
PA 1212 (1,12-Dodecandiamin, Decandicarbonsäure)
PA 1313 (1,13 Diaminotridecan, Undecandicarbonsäure)
PA MXD6 (m-Xylylendiamin, Adipinsäure)
PA TMDT (Trimethylhexamethylendiamin, Terephthalsäure)

Bevorzugte Polyamide sind Polyhexamethylenadipinsäureamid (PA 66) und Polyhexamethylensebacinsäureamid (PA 610) sowie Copolyamide 6/66, insbesondere mit einem Anteil von 5 bis 50 Gew.-% an Caprolactam-Einheiten. PA 66 und Copolyamide 6/66 sind besonders bevorzugt.

Weiterhin sind auch teilaromatische Copolyamide wie PA 6/6T und PA 66/6T, deren Triamingehalt weniger 0,5, vorzugsweise weniger als 0,3 Gew.-% beträgt, geeignet. Die Herstellung der teilaromatischen Copolyamide mit niedrigem Triamingehalt kann z.B. nach den in EP-A 129 195 und EP-A 129 196 beschriebenen Verfahren erfolgen.

Einzelheiten zur Herstellung der einzelnen Polyamide findet der Fachmann z.B. in Ullmanns Enzyklopädie der technischen Chemie, 4. Auflage, Band 19, Seiten 39 bis 54, Verlag Chemie, Weinheim 1980, sowie Ullmanns Encyclopedia of Industrial Chemistry, Vol. A 21, Seiten 179 bis 206, VCH Verlag, Weinheim 1992, sowie Stoeckhert, Kunststofflexikon, 8. Auflage, Seiten 425 bis 428, Hansa Verlag München 1992 (Stichwort "Polyamide" und folgende).

Treibmittelhaltige Polymere im Sinne der vorliegenden Erfindung sind z. B. treibmittelhaltige Styrol(co)polymere, treibmittelhaltiges Polycarbonat und treibmittelhaltiges Polyamid, besonders bevorzugt sind treibmittelhaltige Styrol(co)polymere sowie Polymere, die noch ausgasbare Komponenten enthalten können, z. B. Lösungsmittel oder Wasser aus dem Herstellungsprozess.

Bevorzugte Styrol(co)polymere sind glasklares Polystyrol (GPPS), schlagzäh modifiziertes Polystyrol (HIPS), anionisch polymerisiertes Polystyrol oder anionisch polymerisiertes schlagzäh modifiziertes Polystyrol (A-IPS), Styrol-α-Methylstyrol-Copolymere, Acrylnitril-Butadien-Styrol-Copolymere (ABS), Styrol-Acrylnitril (SAN), Acrylnitril-Styrol-Acrylester (ASA), Methacrylat-Butadien-Styrol (MBS), Methylmethacrylat-Acrylnitril-Butadien-Styrol (MABS)-Copolymerisate oder Mischungen daraus. Den genannten Styrol(co)polymeren kann zusätzlich Polyphenylenether (PPE) beigemischt sein.

Die genannten Styrol(co)polymere können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylenterephthalat (PET) oder Polybutylenterephthalat (PBT), Polyethersulfonen (PES), Polyetherketonen oder Polyethersulfiden (PES) oder Mischungen davon, in der Regel in Anteilen von insgesamt bis maximal 30 Gew.-%, bevorzugt im Bereich von 1 bis 10 Gew.-%, bezogen auf die Polymerschmelze, abgemischt werden. Des Weiteren sind Mischungen in den genannten Mengenbereichen auch mit z. B. hydrophob modifizierten oder funktionalisierten Polymeren oder Oligomeren, Kautschuken, wie Polyacrylaten oder Polydienen, z. B. Styrol-Butadien-Blockcopolymeren oder biologisch abbaubaren aliphatischen oder aliphatisch/aromatischen Copolyestern, möglich.

Der Styrol(co)polymerschmelze können auch Polymer-Recyclate der genannten thermoplastischen Polymere, insbesondere Styrol(co)polymere und treibmittelhaltige Styrol(co)polymere (EPS), in Mengen zugemischt werden, die deren Eigenschaften nicht wesentlich verschlechtern, in der Regel in Mengen von maximal 30 Gew.-%, insbesondere in Mengen von 1 bis 10 Gew.-%.

Die treibmittelhaltige Styrol(co)polymerschmelze enthält in der Regel ein oder mehrere Treibmittel in homogener Verteilung in einem Anteil von insgesamt 2 bis 10 Gew.-%, bezogen auf die treibmittelhaltige Styrol(co)polymerschmelze. Als Treibmittel eignen sich die üblicherweise in EPS eingesetzten physikalischen Treibmittel, wie aliphatische Kohlenwasserstoffe mit 2 bis 7 Kohlenstoffatomen, Alkohole, Ketone, Ether oder halogenierte Kohlenwasserstoffe. Bevorzugt wird Iso-Butan, n-Butan, Iso-Pentan, n-Pentan eingesetzt.

Des Weiteren können der Styrol(co)polymerschmelze Additive, Keimbildner, Weichmacher, Wirkstoffe, z. B. Fungizide, Pestizide, Herbizide, lösliche und unlösliche anorganische und/oder organische Farbstoffe und Pigmente, z. B. IR-Absorber, wie Ruß, Graphit oder Aluminiumpulver, sowie Füllstoffe, z. B. Kreide, Talkum, gemeinsam oder räumlich getrennt zugegeben werden. In der Regel werden die Additive in Mengen im Bereich von 0,01 bis 30, bevorzugt im Bereich von 1 bis 10 Gew.-% zugesetzt. Zur homogenen und mikrodispersen Verteilung der Additive in dem Styrol(co)polymer kann es insbesondere bei polaren Additiven zweckmäßig sein, ein Dispergierhilfsmittel, z. B. Organosilane oder Maleinsäureanhydrid, gepfropfte Styrolpolymere, einzusetzen. Bevorzugte Weichmacher sind Mineralöle, oligomere Styrolpolymere, Phthalate in Mengen von 0,05 bis 10 Gew.-%, bezogen auf das Styrol(co)polymerisat.

Die höhermolekularen Styrol(co)polymerisate erlauben, dass die treibmittelhaltige Styrol(co)polymerschmelze mit einer Temperatur im Bereich von 140 bis 300 °C, bevorzugt im Bereich von 160 bis 240 °C durch die Düsenplatte gefördert werden kann. Eine Abkühlung bis in den Bereich der Glasübergangstemperatur ist nicht notwendig.

Im folgenden wird die Erfindung anhand einer Zeichnung näher beschrieben. Darin zeigt:
Figur 1 einen erfindungsgemäß ausgebildeten Düsenkopf,
Figur 2 ein Verfahrensfließbild des erfindungsgemäßen Verfahrens.

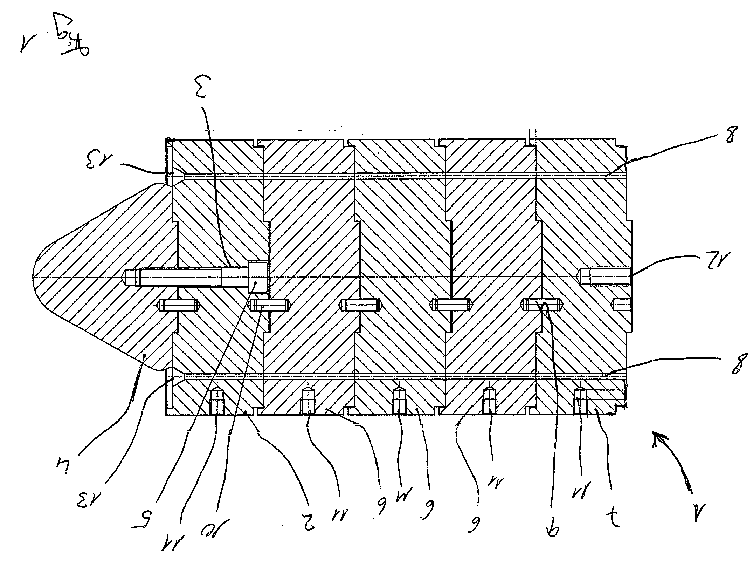

Figur 1 zeigt einen erfindungsgemäß ausgebildeten Düsenkopf 1, bei dem an einem Eintrittsmodul 2, welches mit einer zentralen Bohrung 3 versehen ist, eine Düsenspitze 4 befestigt ist. Hierzu ist die Düsenspitze 4 mit einer Schraube 5, welche durch die zentral Bohrung 3 geführt ist, mit dem Eintrittsmodul 2 verbunden. An Stelle der Schraube 5, welche durch die zentrale Bohrung 3 geführt ist, ist es jedoch auch möglich die Düsenspitze 4 mit mehreren Schrauben am Austrittsmodul 2 zu befestigen. Auch ist jede weitere, dem Fachmann bekannte Befestigungsart, möglich. So kann die Düsenspitze 4 z. B. auch mit dem Eintrittsmodul 2 verschweißt sein oder das Eintrittsmodul 2 ist einstückig mit der Düsenspitze 4 ausgebildet. Weiterhin wäre es z. B. auch möglich im Eintrittsmodul 2 eine Bohrung mit einem Gewinde vorzusehen und die Düsenspitze ebenfalls mit einem Gewinde auszubilden, sodass die Düsenspitze 4 direkt auf das Eintrittsmodul 2 aufgeschraubt werden kann.

Auf der der Düsenspitze 4 gegenüberliegenden Seite des Eintrittsmoduls 2 ist ein erstes Zwischenmodul 6 befestigt. In diesem ersten Zwischenmodul 6 schließen sich weitere Zwischenmodule 6 an. Den Abschluss bildet ein Austrittsmodul 7, welches mit dem letzten Zwischenmodul 6 verbunden ist.

Im Eintrittsmodul 2, den Zwischenmodulen 6 und dem Austrittsmodul 7 sind in axialer Richtung verlaufende Düsenbohrungen 8 ausgebildet. Durch die Anzahl der Düsenbohrungen 8 wird die Menge der an Polymerschmelze, welche durch den Düsenkopf 1 strömt und granuliert wird, bestimmt. Die Düsenbohrungen 8 sind dabei im Eintrittsmodul 2, den Zwischenmodulen 6 und dem Austrittsmodul 7 an der axial gleichen Position ausgebildet, so dass beim Verbinden der Module 2, 6, 7 jeweils durchgehende Düsenbohrungen 8 entstehen. Um die Montage der Module 2, 6, 7 zu erleichtern sind in diesen jeweils Bohrungen 9 ausgebildet, in denen Zentrierstifte 10 aufgenommen sind.

Die Verbindung von Eintrittsmodul 2, Zwischenmodulen 6 und Austrittsmodul 7 kann z. B. mit Hilfe von Spannschrauben erfolgen. In der hier dargestellten Ausführungsform sind am Außenumfang der Module 2, 6, 7 Sacklöcher 11 vorgesehen, in denen jeweils ein Gewinde ausgebildet ist. Zur Verbindung der Module 2, 6, 7 wird auf die Sacklöcher 11 ein in Figur 1 nicht dargestellter Flachstahl aufgelegt, der an den entsprechenden Positionen, an denen sich die Sacklöcher 11 befinden, Bohrungen aufweist. Durch die Bohrungen im Flachstahl werden Schrauben geführt die in den Sacklöcher 11 verschraubt werden.

Im Austrittsmodul 7 ist eine Gewindebohrung 12 ausgebildet, in der sich z. B. eine Schneidevorrichtung befestigen lässt. Mit Hilfe der Schneidvorrichtung wird die Polymerschmelze, die aus den Düsenbohrungen 8 austritt, in Granulat geschnitten. Hierbei ist die Schneidevorrichtung 12 vorzugsweise ein schnell rotierendes Messer.

Zur Herstellung von Polymergranulat wird die Polymerschmelze mittels einer Schmelzepumpe oder eines Extruders in Richtung des Eintrittsmoduls 2 gefördert. Durch die Düsenspitze 4 wird gewährleistet, dass sich keine Schmelze im zentralen Bereich des Eintrittsmoduls 2 sammelt, sondern das die gesamte Schmelze zu den Düsenbohrungen 8 transportiert wird. Damit auch zwischen den einzelnen Düsenbohrungen keine Totzonen entstehen, sind an den Eintrittsöffnungen der Düsenbohrungen 8 konische Erweiterungen 13 ausgebildet. Durch die konischen Erweiterungen 13 wird die Schmelze in die Düsenbohrungen 8 geleitet. Die Polymerschmelze strömt dann durch die Düsenbohrungen 8 und tritt am Austrittmodul 7 aus den Düsenbohrungen 8 aus. Hier werden die einzelnen Schmelzefäden, die aus den Düsenbohrungen 8 austreten, in Granulat geschnitten. Erfindungsgemäß erfolgt das Schneiden der Polymerschmelze in Granulat in einer Granulierkammer, in welche der Düsenkopf 1 mündet. Die Granulierkammer ist dabei von einer Flüssigkeit durchströmt. In der Flüssigkeit kühlt das Granulat ab, sodass vermieden wird, dass sich einzelne Granulatkörner zu Agglomerat miteinander verbinden. Gleichzeitig ist die Flüssigkeit unter einem erhöhten Druck, damit vermieden wird, dass sich die Polymerschmelze, welche noch Leichtsiederreste oder Treibmittel enthalten kann, expandiert.

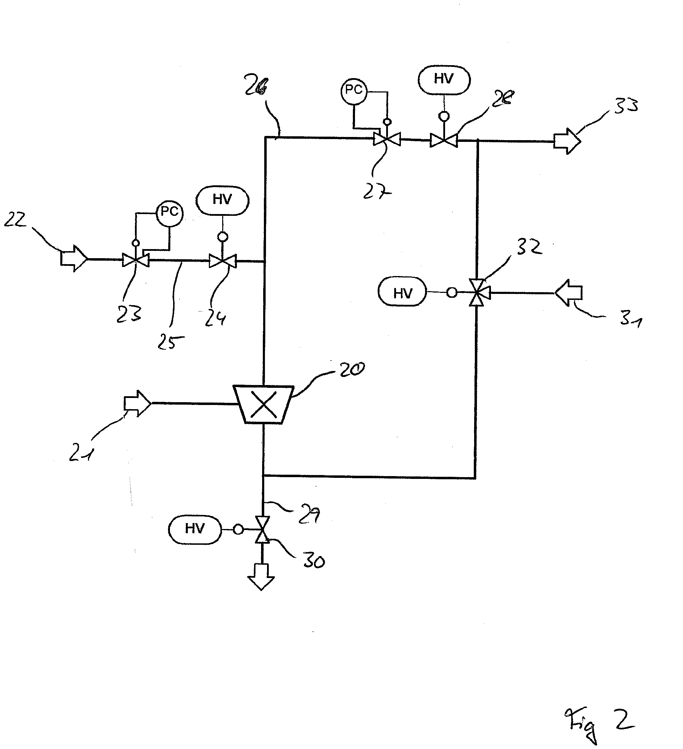

In Figur 2 ist ein Verfahrensfließbild des erfindungsgemäßen Verfahren dargestellt.

Bei dem erfindungsgemäßen Verfahren wird einer Granulierkammer 20 Polymerschmelze 21 zugeführt. Die Zufuhr der Polymerschmelze 21 erfolgt dabei, vorzugsweise über einen Düsenkopf, wie er in Figur 1 dargestellt ist. Zum Anfahren des Granulierprozesses ist die Granulierkammer 20 mit einem unter Druck stehenden Inertgas geflutet. Das Inertgas wird über eine Inertgaszufuhr 22 dem Prozess zugeführt. Der Druck des Inertgases wird über ein Druckregelventil 23 eingestellt. Über ein Gasventil 24 ist eine Inertgaszufuhrleitung 25 mit einer Kreislaufleitung 26 verbunden. In der Kreislaufleitung 26 ist ein zweites Druckregelventil 27 aufgenommen. Über das Druckregeventil 27 wird der Druck in der Kreislaufleitung 26 eingestellt. Dem zweiten Druckregelventil 27 ist ein Absperrventil 28 nachgeschaltet. Zum Anfahren des Granulierprozesses ist das Absperrventil 28 verschlossen und das Gasventil 24 geöffnet. Auf diese Weise kann unter Druck stehendes Gas in die Kreislaufleitung 26 einströmen. Die Granulierkammer 20 und die Kreislaufleitung 26 werden so mit unter Druck stehenden Inertgas geflutet. Aus der Kreislaufleitung 26 zweigt eine Entleerungsleitung 29 ab, welche mit einem zweiten Absperrventil 30 verschließbar ist. Während des Granulierbetriebes ist das zweite Absperrventil 30 verschlossen. Sobald der Granulierprozess gestartet ist wird über eine Flüssigkeitszufuhr 31, welche über ein T-Ventil 32 mit der Kreislaufleitung 26 verbunden ist, Flüssigkeit, die unter dem gleichen Druck steht wie das Inertgas, in die Kreislaufleitung 26 eingeleitet. Gleichzeitig wird das Gasventil 24 geschlossen, damit kein weiteres Gas mehr in den Prozess gelangt. Durch die unter Druck stehende Flüssigkeit wird das Gas aus der Kreislaufleitung 26 und der Granulierkammer 20 verdrängt. Durch das zweite Druckregelventil 27 wird der Druck in der Kreislaufleitung 26 konstant gehalten. Das Absperrventil 28 wird geöffnet, so dass die Flüssigkeit, die das in der Granulierkammer 20 hergestellte Granulat enthält, über einen Flüssigkeitsaustrag 33 aus der Kreislaufleitung 26 entfernt wird. Anschließend wird aus der Flüssigkeit das Granulat abgetrennt.

Bevorzugtes Inertgas, welches zum Anfahren des Prozesses eingesetzt wird, ist Luft oder Stickstoff. Als Flüssigkeit für den laufenden Granulierprozess wird vorzugsweise Wasser eingesetzt.

### Bezugszeichenliste

- 1: Düsenkopf
- 2: Eintrittsmodul
- 3: zentrale Bohrung
- 4: Düsenspitze
- 5: Schraube
- 6: Zwischenmodul
- 7: Austrittsmodul
- 8: Düsenbohrung
- 9: Bohrung
- 10: Zentrierstift
- 11: Sackloch
- 12: Gewindebohrung
- 13: konische Erweiterung
- 20: Granulierkammer
- 21: Polymerschmelze
- 22: Inertgaszufuhr
- 23: Druckregelventil
- 24: Gasventil
- 25: Inertgaszufuhrleitung
- 26: Kreislaufleitung
- 27: zweites Druckregelventil
- 28: Absperrventil
- 29: Entleerungsleitung
- 30: zweites Absperrventil
- 31: Flüssigkeitszufuhr
- 32: T-Ventil
- 33: Flüssigkeitsaustrag

## Patentansprüche

1. Vorrichtung zur Granulierung von Polymerschmelzen, eine Granulierkammer (20) umfassend, die mit einem Flüssigkeitskreislauf (26) verbunden ist, wobei die Polymerschmelze über einen Düsenkopf (1) in die Granulierkammer (20) eingespritzt wird, wobei in dem Düsenkopf (1) Düsenbohrungen (8) ausgebildet sind, **dadurch gekennzeichnet, dass** das L/D-Verhältnis der Düsenbohrungen im Bereich von 50 bis 90 liegt.

2. Vorrichtung nach Anspruch 1, **dadurch gekennzeichnet dass** der Düsenkopf (1) aus einzelnen Modulen (2,6,7) zusammengesetzt ist.

3. Vorrichtung nach Anspruch 2, **dadurch gekennzeichnet, dass** der Düsenkopf (1) zur Einstellung des L/D-Verhältnisses mehrere gleichartige Module (6) umfasst, die in Reihe montiert werden, bis die gewünschte Länge der Düsenbohrungen (8) erreicht ist.

4. Vorrichtung nach Anspruch 2 oder 3, **dadurch gekennzeichnet, dass** in den Modulen (2, 6, 7) jeweils Bohrungen (9) ausgebildet sind, in denen Zentrierstifte (10) aufgenommen sind.

5. Vorrichtung nach einem der Ansprüche 2 bis 4, **dadurch gekennzeichnet, dass** an einem Austrittsmodul (7) eine Schneidvorrichtung befestigt ist.

6. Vorrichtung gemäß einem der Ansprüche 1 bis 5, **dadurch gekennzeichnet, dass** an den Eintrittsöffnungen der Düsenbohrungen (8) konische Erweiterungen (13) ausgebildet sind.
